# EUROPEAN PATENT SPECIFICATION

(11) **EP 2 463 087 B1**
(45) Date of publication and mention of the grant of the patent: **12.10.2016**
(21) Application number: 10806231.6
(22) Date of filing: 04.08.2010
(51) Int. Cl.: B29D 30/56, B29C 35/02, B29L 30/00

(54) **METHOD FOR RETREADING TIRES**
VERFAHREN ZUR RUNDERNEUERUNG VON REIFEN
PROCÉDÉ DE RECHAPAGE DE PNEUS

(30) Priority: 05.08.2009 JP 2009182542; 08.06.2010 JP 2010130862
(43) Date of publication of application: 13.06.2012
(73) Proprietor: Bridgestone Corporation, Tokyo 104-8340 (JP)
(72) Inventor: INUKAI, Takaki, Kodaira-shi Tokyo 187-8531 (JP); MIKAMO, Nobuyoshi, Kodaira-shi Tokyo 187-8531 (JP)
(74) Representative: Oxley, Robin John George
(86) International application number: PCT/JP2010/004907
(87) International publication number: WO 2011/016231

(56) References cited:
- DE-B- 1 022 000
- DE-B- 1 035 891
- FR-A- 1 411 387
- FR-A1- 2 162 497
- GB-A- 2 210 001
- JP-A- 1 110 135
- JP-A- 5 124 132
- JP-A- 62 048 536
- JP-A- 62 261 406
- JP-A- 2004 188 610
- JP-A- 2008 001 067
- US-A- 4 075 047
- US-A- 4 756 782
- US-A1- 2002 129 887
- US-B1- 6 270 602

## Description

### TECHNICAL FIELD

The present invention relates to a method of producing a retreaded tire comprising winding a vulcanized tread (precured tread) on a crown portion of a base tire via unvulcanized rubber to form a shaped tire and vulcanizing this shaped tire to adhere the precured tread to the base tire.

### RELATED ART

As a method of retreading a pneumatic tire, a remolding method (hot retreading method) in which unvulcanized tread rubber without a pattern is attached to a base tire and then vulcanization is performed in a mold to form a pattern and a precuring method (cold retreading method) in which a vulcanized precured tread with a pattern is attached to a base tire without using a mold and then vulcanization is performed in a vulcanization can are known.

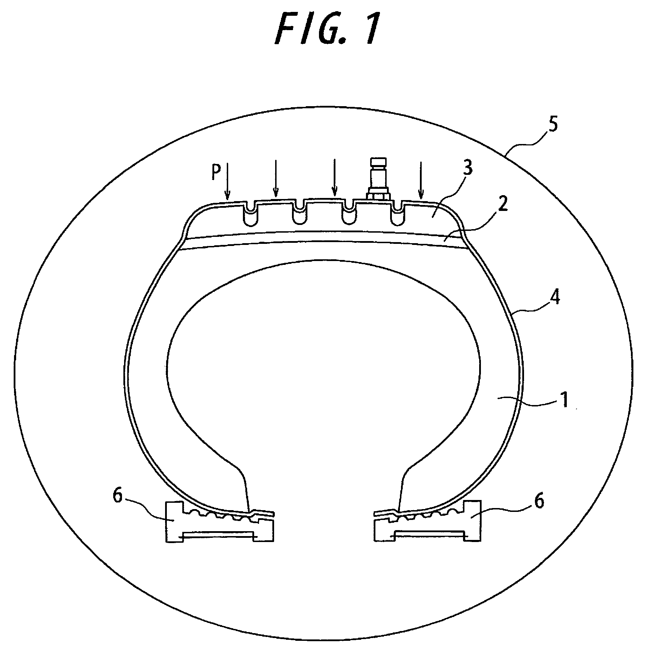

In a cold retreading method, as shown in FIG. 1, unvulcanized rubber 2 (for example, cushion rubber) is arranged on a crown portion of a base tire 1, a vulcanized precured tread 3 with a pattern is attached on the rubber 2, a vulcanization envelope 4 is overlaid on the tire and vulcanization is performed in a vulcanization can 5. The precured tread 3 is tightly adhered to the base tire 1 by holding the pressure of approximately 5 to 7 kg/cm² and the atmosphere temperature of approximately 100 to 130 °C for approximately 2 to 5 hours in the vulcanization can 5. According to this method, since the process temperature in the vulcanization can is comparatively low, the base tire 1 is unlikely to be damaged. Therefore, this method is widely adopted in retreading a tire.

Another method is proposed, in which a base tire is tightly adhered to cushion rubber by controlling pressure in a vulcanization envelope without using a vulcanization can (for example, see JP5154940A).
Reference is also made to US4756782, DE-B-1035891, US4075047, FR-A-1411387, US6270602 and DE-B-1022000.

### DISCLOSURE OF THE INVENTION

### PROBLEMS TO BE SOLVED BY THE INVENTION

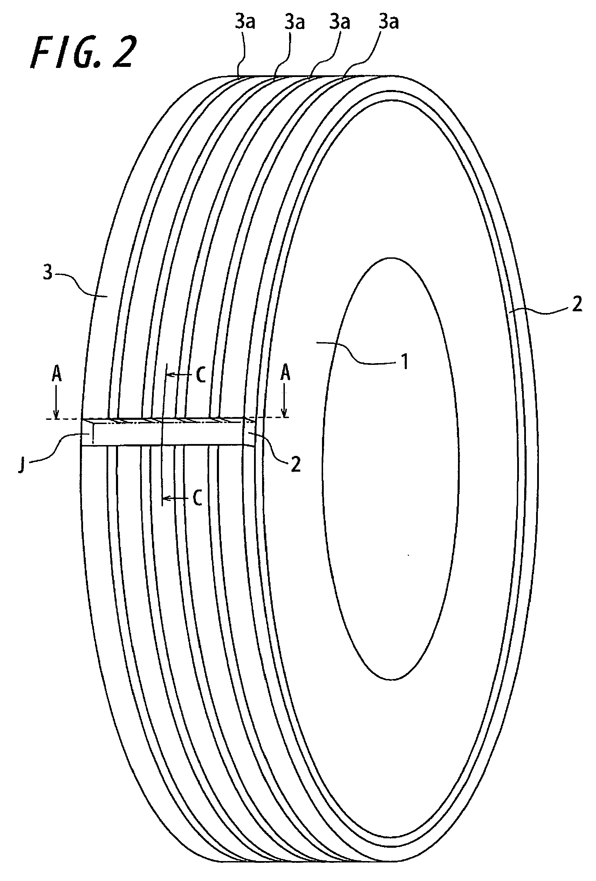

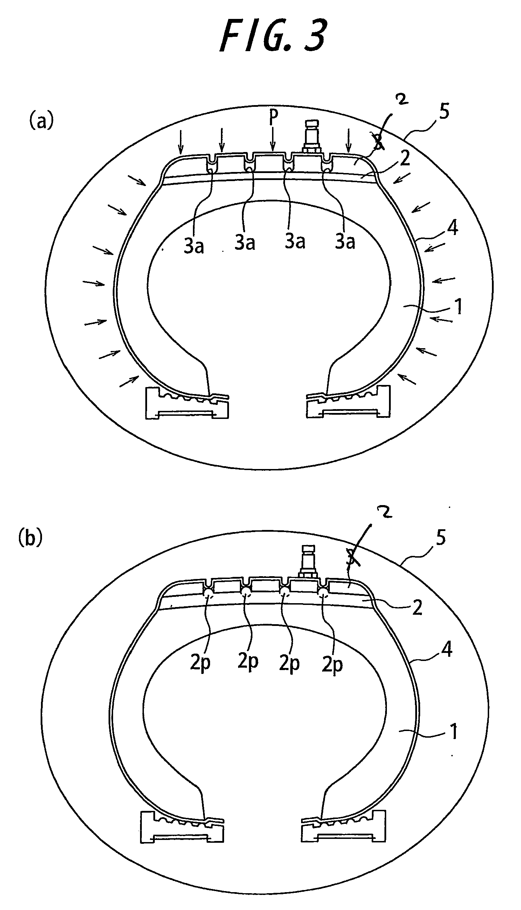

However, the above-mentioned cold retreading method has a problem that a groove provided in a joint portion (connected portion) of a precured tread does not form a predetermined shape. As shown in FIG. 2, the precured tread 3 is wound and arranged on the base tire 1. End portions of the precured tread 3 in the circumferential direction are connected with each other in a joint portion J via rubber 2 as adhesive. In the joint portion J, the rubber 2 existing in a region which is to become a groove is cut off. With reference to FIG. 3 which is a cross-sectional view taken along the line A-A in FIG. 2, a problem which occurs in a groove provided in the joint portion J will be explained.

As shown in FIG. 3 (a), a vulcanization envelope 4 is overlaid on the precured tread 3 of the tire and the tire is vulcanized in the vulcanization can 5 at the pressure of P. At that time, since the envelope 4 is not adhered to the inside of the groove 3a, the pressure P is not applied to the inside of the groove 3a. Therefore, when the rubber 2 is vulcanized, as shown in FIG. 3 (b) a portion 2p of the rubber 2 is pushed out into the groove 3a to partially fill the groove 3a.

In this way, when the pushed-out portion 2p is formed in the inside of the groove 3a provided in the joint portion J, not only the tire may be disfigured but also the desired performance such as noise reduction effect and drainage performance, which are to be achieved by the shape of the groove may not be achieved.

It is, therefore, an object of the present invention to solve the above-mentioned problems and to provide a method of producing a retreaded tire capable of achieving desired performance.

### MEANS FOR SOLVING THE PROBLEM

The subject matter of the present invention is as follows.
(1) A method of producing a retreaded tire comprising: winding a precured tread on a crown portion of a base tire via unvulcanized rubber;
   connecting end portions of the precured tread in a circumferential direction with each other via unvulcanized rubber so as to form a connected portion between the end portions of the precured tread in the circumferential direction; connecting a groove portion of one of the end portions of the precured tread and a groove portion of the other one of the end portions of the precured tread to form a connected groove; inserting a stuffing member into the connected groove, the stuffing member being engaged with a shape of the groove; overlaying a vulcanization envelope covering at least the precured tread to be vulcanized; and adhering the precured tread to the base tire by vulcanization, wherein the stuffing member is a vulcanized rubber which fits the connected groove when inserted into the connected groove, and wherein the stuffing member extends over the connected portion in the circumferential direction.
(2) The method of producing a retreaded tire according to item (1), wherein the stuffing member has a length in the tire circumferential direction to cover the connected portion and is connected to a sheet-like member, both end portions of the sheet-like member in a tire width direction being located in a widthwise inner side of an interface between the precured tread and the rubber in a shoulder portion.
(3) The method of producing a retreaded tire according to item (2), wherein the sheet-like member is made of silicone rubber.
(4) The method of producing a retreaded tire according to item (2)or (3), wherein a length of the sheet-like member in the tire circumferential direction is within a range between 5mm and 10mm.
(5) The method of producing a retreaded tire according to any one of items (2) to (4), wherein the sheet-like member is provided with a needle portion which is to be inserted into one the end of the precured tread across the connected portion between the end portions of the precured tread, a needle portion which is to be inserted into the other end of the precured tread.

### EFFECT OF THE INVENTION

According to the present invention, it is possible to provide a method of producing a retreaded tire with a desired tread pattern, capable of achieving desired performance.

### BRIEF DESCRIPTION OF THE DRAWINGS

FIG. 1 is a view illustrating a cold retreading method.
FIG. 2 is a view illustrating a joint portion of a precured tread.
FIG. 3 is a view illustrating a conventional cold retreading method.
FIG. 4 is a view illustrating a method of producing a retreaded tire according to the first embodiment of the present invention.
FIG. 5 is a view illustrating an example of a tread pattern of a tire and a stuffing member engaged with a groove.
FIG. 6 is a view illustrating a method of producing a retreaded tire according to the second embodiment of the present invention.
FIG. 7 is a view illustrating another example of a seal member for use in the present invention.

### BEST MODE FOR CARRYING OUT THE INVENTION

Hereinafter, a method of producing a retreaded tire of the present invention will be explained in detail with reference to the drawings.

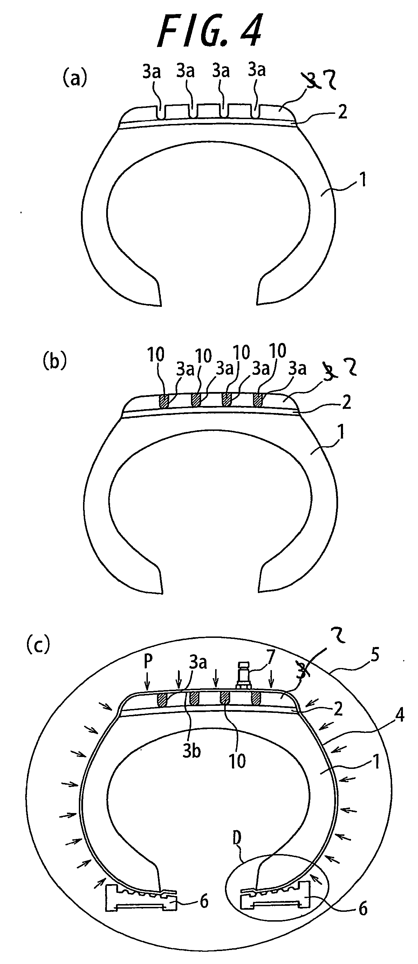

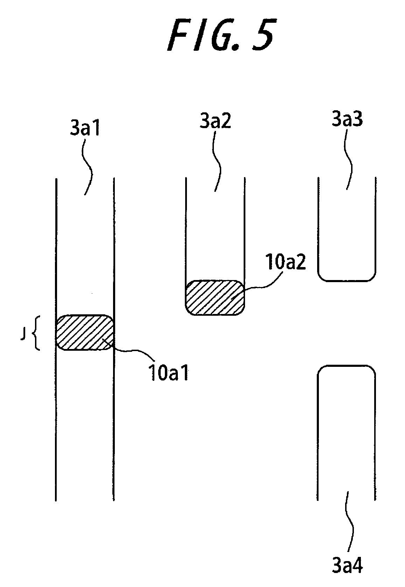

FIGS. 4 and 5 are views illustrating a method of producing a retreaded tire according to the first embodiment of the present invention.

At first, end portions of a precured tread 3 in the circumferential direction are connected with each other by putting rubber 2 as adhesive in a joint portion (connected portion) of the precured tread 3. As shown in FIG. 4 (a) the case that four circumferential grooves 3a are formed on the precured tread 3 will be described as an example. In the joint portion the rubber 2 is cut off and the surface (groove wall and groove bottom) of the groove 3a is flattened with a pusher stick so that the groove 3 a formed in one end of the precured tread 3 in the circumferential direction and the groove 3a formed in the other end are connected.

Next, as shown in FIG. 4 (b) a stuffing member 10 which is engaged with the shape of the groove 3a, in other word, which fits the groove 3a, which is a vulcanized rubber is inserted into the groove 3a provided in the joint portion.

Next, as shown in FIG. 4 (c) a vulcanization envelope 4 is overlaid on the tire and the tire is vulcanized in a vulcanization can 5 at the pressure of P (6kg/cm²). The vulcanization envelope 4 is arranged over the area from one bead portion to the other bead portion and supported by an arc system 6 in an envelope sealing area (shown in a circle D in FIG.4). In addition, the vulcanization envelope 4 has an air supply and exhaust pipe 7 leading to a vacuum pump (not shown) and capable of adjusting the pressure in the vulcanization envelope 4. After the vulcanization envelope 4 is overlaid on the tire, the air in the vulcanization envelope 4 is removed through the air supply and exhaust pipe 7 so that the vulcanization envelope 4 is tightly adhered to the tire.

Since the stuffing member 10 is inserted into the groove 3a, the pressure applied to the vulcanization envelope 4 is also applied to the inside of the groove 3a through the stuffing member 10. Therefore, the pressure P is applied to the inside of the groove 3a as well as a land portion 3b of the precured tread during vulcanization. Then, it is possible to prevent the rubber 2 from flowing out into the groove 3a to form a pushed-out portion. As a result, the desired performance such as noise reduction effect and drainage performance can be achieved by the groove.

Although the circumferential groove 3a continuously extending in the tire circumferential direction has been explained as an example, it is noted that a groove formed in the precured tread is not limited to the circumferential groove but a groove can form an arbitrary pattern.
As shown in FIG. 5 which shows an example of a tread pattern of a tire and a stuffing member engaged with a groove, a stuffing member 10a1 according to the invention extending over the joint portion J is inserted into a circumferential groove 3a1 continuously extending in the tire circumferential direction while a stuffing member 10a2 (not according to the invention) abutting the joint portion J is inserted into a groove 3a2 abutting the joint portion J. It is noted that there is no need to insert a stuffing member into a groove 3a3 which neither extends over nor abuts the joint portion J.

Although the vulcanization envelope arranged over the area from one bead portion to the other bead portion and supported by an arc system in an envelope sealing area has been explained as an example, the vulcanization envelope has only to cover at least the precured tread.

Furthermore, another vulcanization envelope can be used to hold airtightness in the envelop, in which outer and inner envelopes are respectively arranged on the outer and inner surfaces of the tire and the both end portions of these envelopes are locked with each other.

Alternatively, yet another vulcanization envelope can be used to hold airtightness in the envelop, in which an outer envelop is arranged on the outer surface of the tire while an inflatable tube is arranged in the tire and each end portion of the envelope is put between each bead portion of the tire and a rim.

These methods are mainly used in the case where there is a repaired portion in an inner surface of a tire and pressure cannot be directly applied to the portion although pressure is generally applied to the inner surface of the tire in order to keep the tire shape during vulcanization.

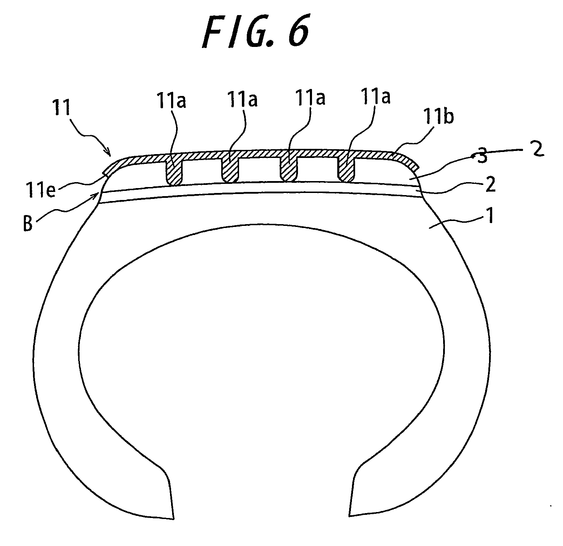

Next, with reference to FIG. 6 a method of producing a retreaded tire according to the second embodiment of the present invention will be explained. The same explanation as that of the method of producing the retreaded tire according to the first embodiment will be omitted.

As shown in FIG. 6, a seal member 11 having convex portions 11a, each of which is engaged with the shape of the groove 3a provided in the joint portion, in other word, each of which fits the groove 3a and a sheet-like member 11b connected to these convex portions 11a is arranged in such a manner that four convex portions 11a are respectively engaged with four grooves 3a. Since this seal member 11 inhibits the flow of the rubber 2 during vulcanization, it is possible to prevent the rubber 2 from flowing out into the groove 3a to form the pushed-out portion as mentioned above.

The shape of the convex portion 11a of the seal member 11 can be easily formed by using a mold based on the groove shape of the precured tread 3. In addition, since one seal member 11 has only to be arranged per one tire in the second embodiment, it is possible to efficiently arrange the seal member 11 compared with the first embodiment in which the stuffing members 10 are respectively inserted into the grooves 3a.

The seal member 11 must have a length in the tire circumferential direction, which covers at least the rubber 2 in the joint portion in order to obtain the effect of the present invention. The length of the seal member 11 in the tire circumferential direction is preferably within a range between 5mm and 10mm with the joint portion as a center. In the case where the length of the seal member 11 in the tire circumferential direction is larger than the above-mentioned range, heat is hard to be transmitted to the inside of the tire during vulcanization, which is not preferable.

In addition, as shown in FIG. 6, both end portions 11e of the seal member 11 in the tire width direction are preferably located in the widthwise inner side of an interface B between the rubber 2 and the precured tread 3 in a shoulder portion. Since the interface B is generally located in the radially outer side of the widest location of the tire, the end portion 11e in the tire width direction is also located in the radially outer side of the interface B. By this configuration, it is possible to arrange the end portion 11 e in the tire width direction so that the end portion 11e does not cover the interface B, in other word, the end portion 11e does not contact with the interface B.

In the case where the end portion 11e of the seal member 11 in the width direction is located on the interface B or in the widthwise outer side of the interface B, the seal member 11 together with the rubber 2 is likely to be absorbed in the inside of the tire during vulcanization. In this case, a concave portion is formed in the rubber 2 in a production tire, which causes disfigurement of the tire.

Since the seal member 11 holds the rubber 2 in the joint portion from the outside to prevent the rubber 2 in joint portion from running over, the shape of the seal member 11 in the tire width and circumferential directions follows a shape of a crown portion of an applied retreaded tire. The thickness of the sheet-like member lib (portion where no convex portion 11a of the seal member 11 is formed) is not particularly limited but is preferably within a range between 2mm and 3mm, for example from the view point of handling ability as a member, stiffness and heat transmission during vulcanization.

As a material of the seal member 11, it is preferable to use silicone rubber which is not deformed and destroyed by the heat of 130 °C, which is applied to a retreaded tire during vulcanization. Since silicone rubber is a flexible material, the seal member 11 made of silicone rubber can easily follow the groove shape of the precured tread 3. In addition, even when there is a slight pattern break in the joint portion of the precured tread 3, the seal member 11 can be deformed to hold the rubber 2 in the joint portion without a gap. In addition, the seal member 11 is made of silicone rubber to prevent the seal member 11 from adhering to the rubber 2. The seal member 11 should be harder than the unvulcanized rubber 2 and softer than the precured tread 3. Specifically, for example, the seal member 11 is made of silicone rubber whose viscosity measured by a viscometer is within a range between 60 degrees and 70 degrees.

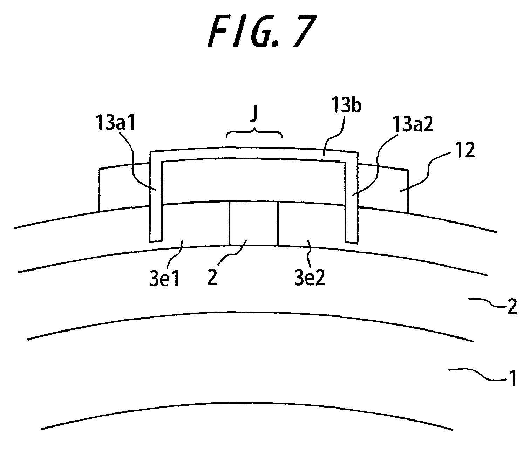

FIG. 7 shows another example of a seal member. FIG. 7 is a circumferential sectional view of the neighborhood of the joint portion J corresponding to a C-C section in FIG. 2. A seal member 12 is provided with a pair of needle portions 13a1, 13a2 coupled by a coupling portion 13b. The precured tread 3 before vulcanization is fixed by inserting one needle portion 13a1 into the beginning end 3e1 of the precured tread 3 in the circumferential direction and inserting the other needle portion 13a2 into the terminating end 3e2 of the precured tread 3. The seal member 12 is provided with the needle portions 13a1, 13a2 so that the end portions of the precured tread 3 do not have to be temporally fixed by a stapler before vulcanization.

Although the coupling portion 13b is exposed on the surface of the seal member 12 in FIG. 7, the coupling portion 13b may be embedded in the seal member 12. Although the pair of needle portions 13a1, 13a2 coupled by the coupling portion 13b, which is similar to a needle of a stapler is used in FIG. 7, only a pair of needle portions 13a1, 13a2 may be used.

### EXAMPLE

Hereinafter, the present invention will be explained in detail with use of an example.

A used tire having a tire size of 11R22.5 is buffed to obtain a base tire. A precured tread is attached on a crown portion of the obtained base tire via unvulcanized rubber and end portions of the precured tread in the circumferential direction are connected with each other via unvulcanized rubber. A seal member which has concave and convex portions corresponding to a groove shape of the precured tread surface in the joint portion (connected portion) and covers the joint portion from the tread surface is arranged in such a manner that the seal member covers the rubber in the joint portion in the tire circumferential direction. The thickness of a sheet-like portion of this seal member, where no groove is formed is 1 mm and both end portions of the seal member in the tire width direction are located in the widthwise inner side of an interface between the precured tread and the rubber in a shoulder portion. This seal member made of silicone rubber (manufactured by Momentive, base compound : hardener = 10:1) is produced by a mold.

The tire with the above-mentioned seal member is covered with a vulcanization envelope, put into a vulcanization can and vulcanized in accordance with an ordinary method to obtain a retreaded tire of an example. There is no runover of the rubber in the groove bottom of the joint portion of the precured tread of the obtained retreaded tire.

### DESCRIPTION OF REFERENCE NUMERALS

- 1: base tire
- 2: rubber
- 3: precured tread
- 3a: groove
- 4: vulcanization envelope
- 5: vulcanization can
- 6: arc system
- 7: air supply and exhaust pipe
- 10: stuffing member
- 11: seal member
- 11a: convex portion
- 11b: sheet-like member
- 12: seal member
- 13a: needle portion
- 13b: coupling portion

## Claims

1. A method of producing a retreaded tire comprising:
winding a precured tread (3) on a crown portion of a base tire (1) via unvulcanized rubber (2);
connecting end portions of the precured tread (3) in a circumferential direction with each other via unvulcanized rubber (2) so as to form a connected portion between the end portions of the precured tread (3) in the circumferential direction;
connecting a groove portion (3a) of one of the end portions of the precured tread (3) and a groove portion (3a) of the other one of the end portions of the precured tread (3) to form a connected groove;
inserting a stuffing member (10) into the connected groove (3a), the stuffing member (10) being engaged with a shape of the groove (3a);
overlaying a vulcanization envelope (4) covering at least the precured tread (3) to be vulcanized; and
adhering the precured tread (3) to the base tire (1) by vulcanization,
wherein the stuffing member (10) is a vulcanized rubber which fits the connected groove when inserted into the connected groove, and
wherein the stuffing member (10) extends over the connected portion in the circumferential direction.

2. The method of producing a retreaded tire according to claim 1, wherein the stuffing member (10) has a length in the tire circumferential direction to cover the connected portion and is connected to a sheet-like member (11b), both (B) end portions (11e) of the sheet-like member (11b) in a tire width direction being located in a widthwise inner side of an interface between the precured tread (3) and the rubber (2) in a shoulder portion.

3. The method of producing a retreaded tire according to claim 2, wherein the sheet-like member (11b) is made of silicone rubber.

4. The method of producing a retreaded tire according to claim 2 or 3, wherein a length of the sheet-like member (11b) in the tire circumferential direction is within a range between 5mm and 10mm.

5. The method of producing a retreaded tire according to any one of claims 2 to 4, wherein the sheet-like member (11b) is provided with a needle portion (13a) which is to be inserted into one the end of the precured tread (3) across the connected portion between the end portions of the precured tread (3a), a needle portion (13a) which is to be inserted into the other end of the precured tread (3).

## Patentansprüche

1. Verfahren zum Herstellen eines runderneuerten Reifens, umfassend:
Aufwickeln einer vorgehärteten Lauffläche (3) auf einen Kronenabschnitt eines Basisreifens (1) mittels unvulkanisiertem Gummi (2);
Miteinanderverbinden der Endabschnitte der vorgehärteten Lauffläche (3) in einer Umfangsrichtung mittels unvulkanisiertem Gummi (2), um einen verbundenen Abschnitt zwischen den Endabschnitten der vorgehärteten Lauffläche (3) in der Umfangsrichtung zu formen;
Verbinden eines Rillenabschnitts (3a) eines der Endabschnitte der vorgehärteten Lauffläche (3) mit einem Rillenabschnitt (3a) des anderen der Endabschnitte der vorgehärteten Lauffläche (3), um eine verbundene Rille zu formen;
Einführen eines Füllelements (10) in die verbundene Rille (3a), wobei das Füllelement (10) mit einer Form der Rille (3a) in Eingriff steht;
Überlagern einer Vulkanisationshülle (4) welche zumindest die vorgehärtete zu vulkanisierende Lauffläche (3) überdeckt; und
Ankleben der vorgehärteten Lauffläche (3) an den Basisreifen (1) mittels Vulkanisation,
wobei das Füllelement (10) ein vulkanisierter Gummi ist, welcher sich an die verbundene Rille anpasst, wenn er in die verbundene Rille eingeführt wird, und
wobei das Füllelement (10) sich über den verbundenen Abschnitt in der Umfangsrichtung erstreckt.

2. Verfahren zum Herstellen eines runderneuerten Reifens nach Anspruch 1, wobei das Füllelement (10) eine Länge in der Reifenumfangsrichtung aufweist, welche den verbundenen Abschnitt abdeckt und mit einem folienartigen Element (11b) verbunden ist, wobei beide (B) Endabschnitte (11e) des folienartigen Elements (11b) in einer Reifenumfangsrichtung auf einer breitseitigen Innenseite einer Schnittstelle zwischen der vorgehärteten Lauffläche (3) und dem Gummi (2) in einem Schulterabschnitt angeordnet sind.

3. Verfahren zum Herstellen eines runderneuerten Reifens nach Anspruch 2, wobei das folienartige Element (11b) aus Silikongummi besteht.

4. Verfahren zum Herstellen eines runderneuerten Reifens nach Anspruch 2 oder 3, wobei eine Länge des folienartigen Elements (11b) in der Reifenumfangsrichtung in einem Bereich zwischen 5 mm und 10 mm liegt.

5. Verfahren zum Herstellen eines runderneuerten Reifens nach einem der Ansprüche 2 bis 4, wobei das folienartige Element (11b) mit einem Nadelabschnitt (13a) versehen ist, welcher in eines der Enden der vorgehärteten Lauffläche (3) über den verbundenen Abschnitt zwischen den Endabschnitten der vorgehärteten Lauffläche (3a) eingeführt werden soll, wobei ein Nadelabschnitt (13a) in das andere Ende der vorgehärteten Lauffläche (3) eingeführt werden soll.

## Revendications

1. Procédé de production d'un bandage pneumatique rechapé, comprenant les étapes ci-dessous :
enroulement d'une bande de roulement précuite (3) sur une partie de sommet d'un bandage pneumatique de base (1) par l'intermédiaire d'un caoutchouc non vulcanisé (2) ;
connexion des parties d'extrémité de la bande de roulement précuite (3) l'une à l'autre, dans une direction circonférentielle, par l'intermédiaire de caoutchouc non vulcanisé (2), de sorte à former une partie connectée entre les parties d'extrémité de la bande de roulement précuite (3) dans la direction circonférentielle ;
connexion d'une partie de rainure (3a) de l'une des parties d'extrémité de la bande de roulement précuite (3) et d'une partie de rainure (3a) de l'autre partie des parties d'extrémité de la bande de roulement précuite (3) pour former une rainure connectée ;
insertion d'un élément de rembourrage (10) dans la rainure connectée (3a), l'élément de rembourrage (10) étant engagé dans une forme de la rainure (3a) ;
superposition d'une enveloppe de vulcanisation (4) recouvrant au moins la bande de roulement précuite (3) devant être vulcanisée ; et
adhésion de la bande de roulement précuite (3) sur le bandage pneumatique de base (1) par vulcanisaiton ;
dans lequel l'élément de rembourrage (10) est constitué par un caoutchouc vulcanisé ajusté dans la rainure connectée lors de son insertion dans la rainure connectée ; et
dans lequel l'élément de rembourrage (10) s'étend au-dessus de la partie connectée dans la direction circonférentielle.

2. Procédé de production d'un bandage pneumatique rechapé selon la revendication 1, dans lequel l'élément de rembourrage (10) a une longueur dans la direction circonférentielle du bandage pneumatique telle à recouvrir la partie connectée, et est connecté à un élément en forme de feuille (11b), les deux (B) parties d'extrémité (11e) de l'élément en forme de feuille (11b), dans une direction de la largeur du bandage pneumatique, étant agencées dans un côté interne dans le sens de la largeur d'une interface entre la bande de roulement précuite (3) et le caoutchouc (2) dans une partie d'épaulement.

3. Procédé de production d'un bandage pneumatique rechapé selon la revendication 2, dans lequel l'élément en forme de feuille (11b) est composé de caoutchouc de silicone.

4. Procédé de production d'un bandage pneumatique rechapé selon les revendications 2 ou 3, dans lequel une longueur de l'élément en forme de feuille (11b), dans la direction circonférentielle du bandage pneumatique, est comprise dans un intervalle allant de 5 mm à 10 mm.

5. Procédé de production d'un bandage pneumatique rechapé selon l'une quelconque des revendications 2 à 4, dans lequel l'élément en forme de feuille (11b) comporte une partie d'aiguille (13a) devant être insérée dans une extrémité de la bande de roulement précuite (3), à travers la partie connectée entre les parties d'extrémité de la bande de roulement précuite (3a), une partie d'aiguille (13a) devant être insérée dans l'autre extrémité de la bande de roulement précuite (3).
